(19) Europäisches Patentamt

European Patent Office

Office européen des brevets

(11) **EP 1 519 210 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
*G02B 21/02* (2006.01)　　　*G02B 21/22* (2006.01)
*G02B 9/60* (2006.01)

(21) Anmeldenummer: **04022501.3**

(22) Anmeldetag: **22.09.2004**

(54) **Stereoskopisches Mikroskopobjektiv**

Stereoscopic microscope lens

Objectif pour stéréomicroscope

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.09.2003 DE 10344943**

(43) Veröffentlichungstag der Anmeldung:
**30.03.2005 Patentblatt 2005/13**

(73) Patentinhaber: **CARL ZEISS JENA GmbH**
**07745 Jena (DE)**

(72) Erfinder:
• **Wartmann, Rolf**
**37136 Waake (DE)**
• **Thirase, Jan**
**37085 Göttingen (DE)**

(56) Entgegenhaltungen:
**US-A- 5 701 196**　　　**US-A- 5 852 515**
**US-B1- 6 226 119**

• **PATENT ABSTRACTS OF JAPAN Bd. 2000, Nr. 22, 9. März 2001 (2001-03-09) -& JP 2001 147378 A (NIKON CORP), 29. Mai 2001 (2001-05-29)**
• **PATENT ABSTRACTS OF JAPAN Bd. 2000, Nr. 25, 12. April 2001 (2001-04-12) -& JP 2001 221955 A (NIKON CORP), 17. August 2001 (2001-08-17)**
• **ZIMMER K-P: "OPTICAL DESIGNS FOR STEREOMICROSCOPES" PROCEEDINGS OF THE SPIE, SPIE, BELLINGHAM, VA, US, Bd. 3482, 1998, Seiten 690-697, XP009013507 ISSN: 0277-786X**

**Beschreibung**

Bei der Stereomikroskopie werden gegenüber der normalen Mikroskopie zur Erzielung eines stereoskopischen Eindrucks zwei getrennte Lichtkanäle durch dasselbe Objektiv geführt. Aus diesem Grund sind die Dimensionen solcher Objektive, was den Durchmesser der Linsen betrifft, größer als bei üblichen Objektiven. Der Korrektur des Farblängsfehlers kommt daher eine besondere Bedeutung zu, da dieser im Stereomikroskop als Farbquerfehler wahrgenommen wird, was den Bildeindruck empfindlich stört. Weitere wünschenswerte Eigenschaften solcher Objektive sind ein möglichst ebenes Bildfeld zur Vermeidung des sogenannten Globuseffektes, welcher ebene Flächen gekrümmt erscheinen läßt, sowie ein großer, ein bequemes Hantieren mit der Probe erlaubender Arbeitsabstand und eine hohe Auflösung.

Im Stand der Technik sind verschiedene Objektive bekannt, die diese Bedingungen mehr oder weniger gut erfüllen. In der US 4.640.586 wird ein Objektivtyp beschrieben, welcher in seiner kompaktesten Form mit vier Linsen auskommt. Die Objektive sind chromatisch gut korrigiert und weisen zum Teil einen großen Arbeitsabstand von mehr als 100 mm auf. Nachteilig macht sich jedoch ein deutlicher Globuseffekt bemerkbar, auch das Öffnungsverhältnis ist relativ klein. In der US 6.339.507 wird ein Objektiv beschrieben, welches nur eine ungenügende chromatische Korrektion aufweist.

Andererseits sind im Stand der Technik auch Objektive bekannt, die eine hohe Auflösung und ein geebnetes Bildfeld miteinander vereinen. Nachteil bei diesen Objektiven ist jedoch, daß sie nur einen kurzen Arbeitsabstand besitzen sowie sehr voluminös sind. So wird in der JP 2001-221955 eine Lösung vorgestellt, die chromatisch hervorragend korrigiert ist, eine geringe Verzeichnung sowie ein großes Öffnungsverhältnis aufweist und bei der auch der Globuseffekt nur gering ausfällt. Der Arbeitsabstand liegt allerdings nur bei maximal 32mm, und das Objektiv ist mit acht Linsen sehr aufwendig konstruiert und teuer in der Anschaffung.

Aufgabe der Erfindung ist es daher, ein kompaktes und hochauflösendes Objektiv für die Stereomikroskopie zu entwikkeln, was sowohl ein geebnetes Bildfeld als auch einen großen Arbeitsabstand aufweist.

Diese Aufgabe wird durch ein stereoskopisches Mikroskopobjektiv gelöst, welches insgesamt fünf Linsen aufweist. Die Brennweite der - von der Objektebene her gesehen - ersten Linse ist negativ und das Verhältnis zur Gesamtbrennweite f des Mikroskopobjektivs beträgt mindestens -2,11 und höchstens -1,20. Der Anteil der bildseitig gelegenen Oberfläche an der Brechkraft der ersten Linse beträgt mindestens 80%. Die Brennweite der zweiten Linse ist positiv, das Verhältnis der Brennweite der zweiten Linse zur Gesamtbrennweite f des Objektivs beträgt mindestens 1,30 und höchstens 1,45. Der Anteil der bildseitig gelegenen Oberfläche an der Brechkraft der zweiten Linse beträgt mindestens 60%. Bei der dritten Linse beträgt der Anteil der dem Objekt zugewandten Oberfläche an der Brechkraft dieser Linse mindestens 60%. Die dritte Linse weist ebenfalls eine positive Brennweite auf, das Verhältnis der Brennweite zur Gesämtbrennweite f beträgt mindestens 1,15 und höchstens 1,37. Die sich daran anschließende vierte Linse weist ebenfalls eine positive Brennweite auf, wobei das Verhältnis zur Gesamtbrennweite mindestens 0,6 und höchstens 1,70 beträgt. Der Anteil der objektseitig gelegenen Oberfläche an der Brechkraft der vierten Linse beträgt mindestens 70%. Die fünfte und letzte Linse weist eine negative Brennweite auf, wobei das Verhältnis zur Gesamtbrennweite mindestens -0,96 und höchstens -0,48 beträgt. Der Anteil der bildseitig gelegenen Oberfläche an der Brechkraft der fünften Linse beträgt mindestens 80%. Weiterhin ist der Betrag der Brechkraft der vierten und fünften Linse in Kombination kleiner als das 0,31-fache der Gesamtbrechkraft des Mikroskopobjektivs. Außerdem ist zu beachten, daß die erste und fünfte Linse aus Materialien, welche eine Teildispersion eines ersten Typs aufweisen, gefertigt sind. Dabei können beide Linsen aus demselben Material oder aus verschiedenen Materialien gefertigt sein, wichtig ist nur, daß beide die Teildispersion ersten Typs aufweisen. Ebenso verhält es sich mit der zweiten, dritten und vierten Linse, die aus Materialien, welche eine Teildispersion eines zweiten Typs aufweisen, gefertigt sind.

Der Arbeitsabstand des erfindungsgemäßen Objektivs zum Objekt liegt immer in der Größenordnung der Objektivbrennweite. Das erfindungsgemäße Objektiv ist sehr kompakt: Die Baulänge kann auf weniger als 68% der Gesamtbrennweite beschränkt werden, der Durchmesser auf weniger als 77% der Gesamtbrennweite. Das Bildfeld ist zudem eben, die Petzval'sche Summe, welche die Wölbung des Bildfeldes charakterisiert, ist kleiner als 0,006. Im visuellen Spektrum beträgt der Farblängsfehler weniger als 0,00035% der Brennweite des Objektivs. Eine hohe Auflösung des Objektivs wird durch die numerische Apertur von 0,3 in der Zusammenwirkung mit einer beugungsbegrenzten Korrektion - d.h. die Restabweichungen der Bildfehler sind kleiner als der Durchmesser des Beugungsscheibchens - erreicht.

In einer Ausgestaltung der Erfindung sind die erste und fünfte Linse aus Gläsern mit Kurzflint-Anomalie gefertigt. In einer weiteren Ausführung der Erfindung sind die zweite, dritte und vierte Linse aus Gläsern mit Fluorkron-Anomalie gefertigt.

Vorteilhafte Ausgestaltungen des Mikroskopobjektivs ergeben sich mit den in den Unteransprüchen 4 bis 6 aufgeführten Konstruktionsdaten. Die Brechzahlen beziehen sich dabei auf eine Wellenlänge von 546,07nm. Die Abbezahlen $\nu_e$ wurden aus der Gleichung

$$\nu_e = \frac{n_e - 1}{n_{F'} - n_{C'}}$$

berechnet. Dabei ist $n_e$ die Brechzahl bei einer Wellenlänge von 546,07nm, $n_C$, die Brechzahl bei einer Wellenlänge von 643,85nm und $n_{F'}$ die Brechzahl bei einer Wellenlänge von 479,99nm. Alle drei Objektive weisen eine numerische Apertur von 0,3 auf, Brennweite und Arbeitsabstand sind jedoch unterschiedlich. Für den ersten Satz von Konstruktionsdaten im vierten Unteranspruch beträgt die Brennweite 78,2mm, der Arbeitsabstand 80,0mm. Für den zweiten Satz von Konstruktionsdaten im fünften Unteranspruch beträgt die Brennweite 78,5mm, der Arbeitsabstand 77,3mm. Für den dritten Satz von Konstruktionsdaten im sechsten Unteranspruch schließlich beträgt die Brennweite 78,2mm, der Arbeitsabstand 81,8mm.

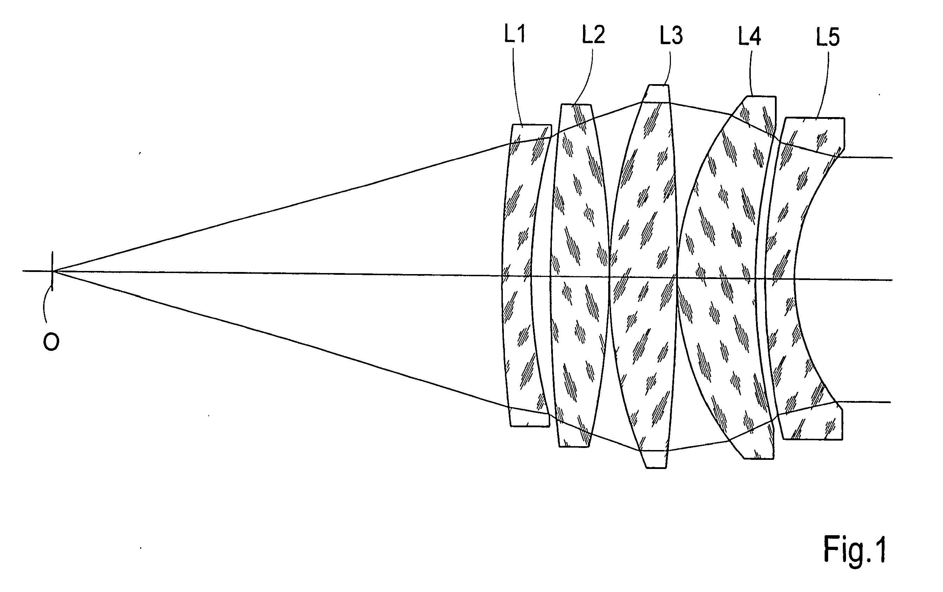

Das Mikroskopobjektiv soll im folgenden an einem Ausführungsbeispiel erläutert werden. In der dazugehörigen Zeichnung zeigt Fig.1 einen möglichen Objektivaufbau in Anlehnung an die Konstruktionsdaten des sechsten Unteranspruchs.

Fig.1 zeigt ein Schnittbild des Objektivs gemäß der Erfindung. Ganz links befindet sich die Objektebene O, in einem Abstand von einem 81,8mm befindet sich eine erste Linse L1 mit negativer Brennweite. Die Dicke dieser Linse an der optischen Achse beträgt 4mm. Die Radienkrümmungsmittelpunkte der beiden Linsenflächen der ersten Linse L1 liegen dabei bildseitig. Die Krümmung der bildseitig gelegenen Oberfläche der ersten Linse L1 ist wesentlich stärker als die der objektseitig gelegenen Oberfläche, der Hauptanteil der Brechkraft ist daher auf die zweite Fläche konzentriert. In einem Abstand von 2,49mm entlang der optischen Achse ist eine zweite Linse L2 angeordnet. Die zweite Linse L2 weist eine positive Brennweite auf. Auch hier weist die bildseitig gelegene Oberfläche eine stärkere Krümmung als die objektseitig gelegene Oberfläche der zweiten Linse L2 auf. In einem sehr geringen Abstand von 0,15mm entlang der optischen Achse folgt eine dritte Linse L3 mit ebenfalls positiver Brennweite. Hier ist die Krümmung der objektseitig gelegenen Oberfläche stärker, wodurch die Brechkraft zu mindestens 60% auf diese konzentriert wird. In einem ebenfalls sehr geringen Abstand von 0,15mm entlang der optischen Achse folgt eine vierte Linse L4 mit positiver Brennweite. Hier weist ebenfalls die objektseitig gelegene Linsenoberfläche eine wesentlich größere Radienkrümmung als die bildseitig gelegene Oberfläche auf. Als letztes folgt eine fünfte Linse L5 mit negativer Brennweite. Die Radienkrümmungsmittelpunkte beider Oberflächen der fünften Linse L5 liegen bildseitig, die Krümmung der bildseitig gelegenen Oberfläche ist wesentlich stärker als die der objektseitig gelegenen Oberfläche, so daß mehr als 80% der Brechkraft auf die zweite Oberfläche konzentriert sind. Die Brechkraft der Kombination von vierter Linse L4 und fünfter Linse L5 beträgt das -0,303-fache der Gesamtbrechkraft des Mikroskopobjektivs. Die zweite, dritte und vierte Linse L2, L3, L4 sind im Beispiel alle aus demselben Material, einem Glas mit Fluorkron-Anomalie gefertigt. Dies muß jedoch nicht zwingend so sein, in den Konstruktionsbeispielen des vierten und fünften Unteranspruchs werden für diese Linsen mindestens teilweise verschiedene Materialien verwendet. Die erste Linse L1 und die fünfte Linse L5 sind aus unterschiedlichen Materialien gefertigt, diese weisen jedoch jeweils Kurzflint-Anomalie auf.

**Bezugszeichenliste**

L1,...,L5    Linsen
O           Objektebene

**Patentansprüche**

1.  Stereoskopisches Mikroskopobjektiv, umfassend von der Objektebene her geordnet

- eine erste Linse (L1) mit negativer Brennweite ($f_1$), wobei das Verhältnis von der Brennweite ($f_1$) zur Gesamtbrennweite (f) des Mikroskopobjektivs mindestens -2,11 und höchstens -1,20 beträgt und der Anteil der bildseitig gelegenen Oberfläche an der Brechkraft der ersten Linse (L1) mindestens 80% beträgt,
- eine zweite Linse (L2) mit positiver Brennweite ($f_2$), wobei das Verhältnis von der Brennweite ($f_2$) zur Gesamtbrennweite (f) mindestens 1,30 und höchstens 1,45 beträgt und der Anteil der bildseitig gelegenen Oberfläche an der Brechkraft der zweiten Linse (L2) mindestens 60% beträgt,
- eine dritte Linse (L3) mit positiver Brennweite ($f_3$), wobei das Verhältnis von der Brennweite ($f_3$) zur Gesamtbrennweite (f) mindestens 1,15 und höchstens 1,37 beträgt und der Anteil der objektseitig gelegenen Oberfläche an der Brechkraft der dritten Linse (L3) mindestens 60% beträgt,
- eine vierte Linse (L4) mit positiver Brennweite ($f_4$), wobei das Verhältnis von der Brennweite ($f_4$) zur Gesamt-brennweite (f) mindestens 0,65 und höchstens 1,70 beträgt und der Anteil der objektseitig gelegenen Oberfläche an der Brechkraft der vierten Linse (L4) mindestens 70% beträgt, und
- eine fünfte Linse (L5) mit negativer Brennweite ($f_5$), wobei das Verhältnis von der Brennweite ($f_5$) zur Gesamt-brennweite (f) mindestens -0,96 und höchstens -0,48 beträgt und der Anteil der bildseitig gelegenen Oberfläche an der Brechkraft der fünften Linse (L5) mindestens 80% beträgt,
- wobei der Betrag der Brechkraft der vierten und fünften Linse (L4) bzw. (L5) in Kombination kleiner als das 0,31-fache der Gesamtbrechkraft des Mikroskopobjektivs ist, und
- wobei die erste und fünfte Linse (L1) bzw. (L5) aus Materialien, welche eine Teildispersion eines ersten Typs aufweisen, und die zweite, dritte und vierte Linse (L2), (L3), bzw. (L4) aus Materialien, welche eine Teildispersion eines zweiten Typs aufweisen, gefertigt sind.

2. Stereoskopisches Mikroskopobjektiv nach Anspruch 1, **dadurch gekennzeichnet, daß** die erste und fünfte Linse (L1) bzw. (L5) aus Gläsern mit Kurzflint-Anomalie gefertigt sind.

3. Stereoskopisches Mikroskopobjektiv nach Anspruch 1 oder 2, **dadurch gekennzeichnet, daß** die zweite, dritte und vierte Linse (L2), (L3), bzw. (L4) aus Gläsern mit Fluorkron-Anomalie gefertigt sind.

4. Stereoskopisches Mikroskopobjektiv nach einem der Ansprüche 1 bis 3, **gekennzeichnet durch** folgende Konstruktionsdaten mit Radien r, Dicken d und Abständen a in mm, Brechzahlen $n_e$ bei einer Wellenlänge von 546.07 nm und Abbezahlen $v_e$:

|  | r | d | a | $n_e$ | $v_e$ |
|---|---|---|---|---|---|
| Objektebene | ∞ | | | | |
| | | | 80,00 | | |
| L1 | -546,349 | 4,00 | | 1,7545 | 35,1 |
| | 95,031 | | | | |
| | | | 2,05 | | |
| L2 | 160,797 | 10,86 | | 1,4879 | 84,1 |
| | -78,302 | | | | |
| | | | 0,15 | | |
| L3 | 74,990 | 13,02 | | 1,4879 | 84,1 |
| | -143,238 | | | | |
| | | | 0,48 | | |
| L4 | 44,344 | 17,03 | | 1,6225 | 63,2 |
| | -127,098 | | | | |
| | | | 0,80 | | |
| L5 | -112,672 | 4,00 | | 1,5608 | 53,8 |
| | 30,068 | | | | |

5. Stereoskopisches Mikroskopobjektiv nach einem der Ansprüche 1 bis 3, **gekennzeichnet durch** folgende Konstruktionsdaten mit Radien r, Dicken d und Abständen a in mm, Brechzahlen $n_e$ bei einer Wellenlänge von 546.07 nm und Abbezahlen $v_e$:

|  | r | d | a | $n_e$ | $\nu_e$ |
|---|---|---|---|---|---|
| Objektebene | ∞ | | | | |
| | | | 77,30 | | |
| L1 | -169,194 | 4,00 | | 1,6164 | 44,2 |
| | 87,219 | | | | |
| | | | 3,01 | | |
| L2 | 167, 878 | 12,00 | | 1,4985 | 81,2 |
| | -73, 918 | | | | |
| | | | 0,15 | | |
| L3 | 76,627 | 13,00 | | 1,4985 | 81,2 |
| | -105, 075 | | | | |
| | | | 1,85 | | |
| L4 | 42,475 | 16,00 | | 1,6203 | 63,0 |
| | 415,764 | | | | |
| | | | 0,85 | | |
| L5 | 769,500 | 4,00 | | 1,6164 | 44,2 |
| | 30,288 | | | | |

**6.** Stereoskopisches Mikroskopobjektiv nach einem der Ansprüche. 1 bis 3, **gekennzeichnet durch** folgende Konstruktionsdaten mit Radien r, Dicken d und Abständen a in mm, Brechzahlen $n_e$ bei einer Wellenlänge von 546.07 nm und Abbezahlen $\nu_e$:

|  | r | d | a | $n_e$ | $\nu_e$ |
|---|---|---|---|---|---|
| Objektebene | ∞ | | | | |
| | | | 81,8 | | |
| L1 | 494,088 | 4,00 | | 1,7162 | 53,6 |
| | 95,031 | | | | |
| | | | 2,49 | | |
| L2 | 175,086 | 12,00 | | 1,4985 | 81,1 |
| | -80,011 | | | | |
| | | | 0,15 | | |
| L3 | 67,313 | 13,00 | | 1,4985 | 81, |
| | -208,350 | | | | |
| | | | 0,15 | | |
| | 40,098 | | | | |

Tabelle fortgesetzt

|  | r | d | a | $n_e$ | $\nu_e$ |
|---|---|---|---|---|---|
| Objektebene | ∞ |  |  |  |  |
| L4 |  | 13,00 |  | 1,4985 | 81,1 |
|  | 91,729 |  |  |  |  |
|  |  |  | 1,20 |  |  |
|  | 91,071 |  |  |  |  |
| L5 |  | 4,00 |  | 1,6580 | 39,4 |
|  | 31,395 |  |  |  |  |

**Claims**

1. Stereoscopic microscope objective comprising, disposed starting from the object plane,

   - a first lens (L1) having a negative focal length ($f_1$), wherein the ratio of the focal length ($f_1$) to the total focal length (f) of the microscope objective is at least -2.11 and at most -1.20 and the surface located on the image-side has at least 80% of the refractive power of the first lens (L1),
   - a second lens (L2) having a positive focal length ($f_2$), wherein the ratio of the focal length ($f_2$) to the total focal length (f) is at least 1.30 and at most 1.45 and the surface located on the image-side has at least 60% of the refractive power of the second lens (L2),
   - a third lens (L3) having a positive focal length ($f_3$), wherein the ratio of the focal length ($f_3$) to the total focal length (f) is at least 1.15 and at most 1.37 and the surface located on the object-side has at least 60% of the refractive power of the third lens (L3),
   - a fourth lens (L4) having a positive focal length ($f_4$), wherein the ratio of the focal length ($f_4$) to the total focal length (f) is at least 0.65 and at most 1.70 and the surface located on the object-side has at least 70% of the refractive power of the fourth lens (L4),
   - a fifth lens (L5) having a negative focal length ($f_5$), wherein the ratio of the focal length ($f_5$) to the total focal length (f) is at least -0.96 and at most -0.48 and the surface located on the image-side has at least 80% of the refractive power of the fifth lens (L3),
   - wherein the amount of refractive power of the fourth and fifth lenses (L4) and (L5) in combination is smaller than 0.31 times the total refractive power of the microscope objective, and
   - wherein the first and fifth lenses (L1) and (L5) are produced from materials which have a first type of partial dispersion and the second, third and fourth lenses (L2), (L3) and (L4) are produced from materials which have a second type of partial dispersion.

2. Stereoscopic microscope objective as claimed in Claim 1, **characterised in that** the first and fifth lenses (L1) and (L5) are produced from glasses having a short flint anomaly.

3. Stereoscopic microscope objective as claimed in Claim 1 or 2, **characterised in that** the second, third and fourth lenses (L2), (L3) and (L4) are produced from glasses having a fluor crown anomaly.

4. Stereoscopic microscope objective as claimed in any one of Claims 1 to 3, **characterised by** the following constructional data having radii r, thicknesses d and distances a in mm, refractive indices $n_e$ at a wavelength of 546.07 nm and Abbe values $\nu_e$:

|  | r | d | a | $n_e$ | $\nu_e$ |
|---|---|---|---|---|---|
| Object plane | ∞ |  |  |  |  |
|  |  |  | 80.00 |  |  |
|  | -546.349 |  |  |  |  |
| L1 |  | 4.00 |  | 1.7545 | 35.1 |
|  | 95.031 |  |  |  |  |

Table continued

|  | r | d | a | $n_e$ | $\upsilon_e$ |
|---|---|---|---|---|---|
| Object plane | ∞ |  |  |  |  |
|  |  |  | 2.05 |  |  |
| L2 | 160.797 | 10.86 |  | 1.4879 | 84.1 |
|  | -78.302 |  |  |  |  |
|  |  |  | 0.15 |  |  |
| L3 | 74.990 | 13.02 |  | 1.4879 | 84.1 |
|  | -143.238 |  |  |  |  |
|  |  |  | 0.48 |  |  |
| L4 | 44.344 | 17.03 |  | 1.6225 | 63.2 |
|  | -127.098 |  |  |  |  |
|  |  |  | 0.80 |  |  |
| L5 | -112.672 | 4.00 |  | 1.5608 | 53.8 |
|  | 30.068 |  |  |  |  |

5. Stereoscopic microscope objective as claimed in any one of Claims 1 to 3, **characterised by** the following constructional data having radii r, thicknesses d and distances a in mm, refractive indices $n_e$ at a wavelength of 546.07 nm and Abbe values $\upsilon_e$:

|  | r | d | a | $n_e$ | $\upsilon_e$ |
|---|---|---|---|---|---|
| Object plane | ∞ |  |  |  |  |
|  |  |  | 77.30 |  |  |
| L1 | -169.194 | 4.00 |  | 1.6164 | 44.2 |
|  | 87.219 |  |  |  |  |
|  |  |  | 3.01 |  |  |
| L2 | 167.878 | 12.00 |  | 1.4985 | 81.2 |
|  | -73.918 |  |  |  |  |
|  |  |  | 0.15 |  |  |
| L3 | 76.627 | 13.00 |  | 1.4985 | 81.2 |
|  | -105.075 |  |  |  |  |
|  |  |  | 1.85 |  |  |
| L4 | 42.475 | 16.00 |  | 1.6203 | 63.0 |
|  | 415.764 |  |  |  |  |
|  |  |  | 0.85 |  |  |
|  | 769.500 |  |  |  |  |

EP 1 519 210 B1

Table continued

| | r | d | a | $n_e$ | $\upsilon_e$ |
|---|---|---|---|---|---|
| Object plane | ∞ | | | | |
| L5 | | 4.00 | | 1.6164 | 44.2 |
| | 30.288 | | | | |

**6.** Stereoscopic microscope objective as claimed in any one of Claims 1 to 3, **characterised by** the following constructional data having radii r, thicknesses d and distances a in mm, refractive indices $n_e$ at a wavelength of 546.07 nm and Abbe values $\upsilon_e$:

| | r | d | a | $n_e$ | $\upsilon_e$ |
|---|---|---|---|---|---|
| Object plane | ∞ | | | | |
| | | | 81.8 | | |
| L1 | 494.088 | 4.00 | | 1.7162 | 53.6 |
| | 95.031 | | | | |
| | | | 2.49 | | |
| L2 | 175.086 | 12.00 | | 1.4985 | 81.1 |
| | -80.011 | | | | |
| | | | 0.15 | | |
| L3 | 67.313 | 13.00 | | 1.4985 | 81.1 |
| | -208.350 | | | | |
| | | | 0.15 | | |
| L4 | 40.098 | 13.00 | | 1.4985 | 81.1 |
| | 91.729 | | | | |
| | | | 1.20 | | |
| L5 | 91.071 | 4.00 | | 1.6580 | 39.4 |
| | 31.395 | | | | |

## Revendications

**1.** Objectif pour stéréomicroscope, comprenant de façon ordonnée à partir du plan d'objet

- une première lentille (L1) avec focale négative ($f_1$), le rapport entre la focale ($f_1$) et la focale globale (f) de l'objectif du microscope étant d'au moins -2,11 et d'au plus -1,20 et la fraction de la surface placée côté image par rapport au pouvoir réfringent de la première lentille (L1) représentant au moins 80 %,
- une deuxième lentille (L2) avec focale positive ($f_1$), le rapport entre la focale ($f_2$) et la focale globale (f) étant d'au moins 1,30 et d'au plus 1,45 et la fraction de la surface placée côté image par rapport au pouvoir réfringent de la deuxième lentille (L2) représentant au moins 60 %,
- une troisième lentille (L3) avec focale positive ($f_3$), le rapport entre la focale ($f_3$) et la focale globale (f) étant d'au moins 1,15 et d'au plus 1,37 et la fraction de la surface placée côté objet par rapport au pouvoir réfringent de la troisième lentille (L3) représentant au moins 60 %,
- une quatrième lentille (L4) avec une focale positive ($f_4$) , le rapport entre la focale ($f_4$) et la focale globale (f)

8

étant d'au moins 0,65 et d'au plus 1,70 et la fraction de la surface posée côté objet par rapport au pouvoir réfringent de la quatrième lentille (L4) représentant au moins 70 %, et

- une cinquième lentille (L5) avec focale négative ($f_5$), le rapport entre la focale ($f_5$) et la focale globale (f) étant d'au moins -0,96 et d'au plus -0,48 et la fraction de la surface posée côté image par rapport au pouvoir réfringent de la cinquième lentille (L5) représentant au moins 80 %,

- la valeur du pouvoir réfringent des quatrième et cinquième lentilles (L4) et (L5) en combinaison étant inférieure à 0,31 fois le pouvoir réfringent global de l'objectif du microscope, et

- la première et la cinquième lentilles (L1) et (L5) étant fabriquées à base de matériaux qui présentent une dispersion partielle d'un premier type, et la seconde, la troisième et la quatrième lentilles (L2), (L3) et (L4) à base de matériaux qui présentent une dispersion partielle d'un second type

2. Objectif pour le stéréomicroscope selon la revendication 1, **caractérisé en ce que** la première et la cinquième lentilles (L1) et (L5) sont fabriquées à base de verre avec anomalie de flint court.

3. Objectif pour stéréomicroscope selon la revendication 1 ou la revendication 2, **caractérisé en ce que** la seconde, la troisième et la quatrième lentilles (L2), (L3) et (L4) sont fabriquées à base de verre avec anomalie de Fluor Crown.

4. Objectif pour stéréomicroscope selon l'une quelconque des revendications 1 à 3, **caractérisé par** les caractéristiques de construction suivantes avec des rayons r, des épaisseurs d et des espacements a en mm, des indices de réfraction $n_e$ pour une longueur d'onde de 546,07 nm et les coefficients d'Abbe $v_e$ :

|  | r | d | a | $n_e$ | $v_e$ |
|---|---|---|---|---|---|
| Plan d'objet | ∞ | | | | |
| | | | 80,00 | | |
| L1 | -546,349 | 4,00 | | 1,7545 | 35,1 |
| | 95,031 | | | | |
| | | | 2,05 | | |
| L2 | 160,797 | 10,86 | | 1,4879 | 84,1 |
| | -78,302 | | | | |
| | | | 0,15 | | |
| L3 | 74,990 | 13,02 | | 1,4879 | 84,1 |
| | -143,238 | | | | |
| | | | 0,48 | | |
| L4 | 44,344 | 17,03 | | 1,6225 | 63,2 |
| | -127,098 | | | | |
| | | | 0,80 | | |
| L5 | -112,672 | 4,00 | | 1,5608 | 53,8 |
| | 30,068 | | | | |

5. Objectif pour stéréomicroscope selon l'une quelconque des revendications 1 à 3, **caractérisé par** les caractéristiques de construction suivantes avec des rayons r, des épaisseurs d et des espacements a en mm, des indices de réfraction $n_e$ pour une longueur d'onde de 546,07 nm et des coefficients d'Abbe $V_e$ :

|  | r | d | a | $n_e$ | $v_e$ |
|---|---|---|---|---|---|
| Plan d'objet | ∞ | | | | |
| | | | 77,30 | | |
| L1 | -169,194 | 4,00 | | 1,6164 | 44,2 |
| | 87,219 | | | | |
| | | | 3,01 | | |
| L2 | 167,878 | 12,00 | | 1,4985 | 81,2 |
| | -73,918 | | | | |
| | | | 0,15 | | |
| L3 | 76,627 | 13,00 | | 1,4985 | 81,2 |
| | -105,075 | | | | |
| | | | 1,85 | | |
| L4 | 42,475 | 16,00 | | 1,6203 | 63,0 |
| | 415,764 | | | | |
| | | | 0,85 | | |
| L5 | 769,500 | 4,00 | | 1,6164 | 44,2 |
| | 30,288 | | | | |

**6.** Objectif pour stéréomicroscope selon l'une quelconque des revendications 1 à 3, **caractérisé par** les données de construction suivantes avec des rayons r, des épaisseurs d et des espacements a en mm, des indices de réfraction $n_e$ pour une longueur d'onde de 546,07 nm et des coefficients d'Abbe $v_e$ :

|  | r | d | a | $n_e$ | $v_e$ |
|---|---|---|---|---|---|
| Plan d'objet | ∞ | | | | |
| | | | 81,8 | | |
| L1 | 494,088 | 4,00 | | 1,7162 | 53,6 |
| | 95,031 | | | | |
| | | | 2,49 | | |
| L2 | 175,086 | 12,00 | | 1,4985 | 81,1 |
| | -80,011 | | | | |
| | | | 0,15 | | |
| L3 | 67,313 | 13,00 | | 3,4985 | 81,1 |
| | -208,350 | | | | |
| | | | 0,15 | | |
| | 40,098 | | | | |

Suite de tableau

|  | r | d | a | $n_e$ | $v_e$ |
|---|---|---|---|---|---|
| Plan d'objet | ∞ |  |  |  |  |
| L4 |  | 10,00 |  | 1,4985 | 81,1 |
|  | 415,764 |  |  |  |  |
|  |  |  | 1,20 |  |  |
| L5 | 91,071 |  |  |  |  |
|  |  | 4,00 |  | 1,6580 | 39,4 |
|  | 31,395 |  |  |  |  |

L1　L2　L3　L4　L5

O

Fig.1

EP 1 519 210 B1